Europäisches Patentamt

European Patent Office

Office européen des brevets

(11) Publication number: **0 210 060**
A2

# EUROPEAN PATENT APPLICATION

(21) Application number: 86305565.3

(22) Date of filing: 18.07.86

(51) Int. Cl.⁴: **H 01 H 83/14**
**H 02 H 3/16**

(30) Priority: 19.07.85 GB 8518254

(43) Date of publication of application:
28.01.87 Bulletin 87/5

(84) Designated Contracting States:
AT BE CH DE FR GB IT LI LU NL SE

(71) Applicant: MK ELECTRIC LIMITED
Shrubbery Road
Edmonton London N9 0PB(GB)

(72) Inventor: Dewsnap, Paul Michael
10 The Pines
Woodford Green Essex, IG8 0RW(GB)

(72) Inventor: Macconnacher, Stuart Alastair
2 Boundary Drive
Hertford, SG14 3JG(GB)

(74) Representative: Fisher, Bernard et al,
Raworth, Moss & Cook 36 Sydenham Road
Croydon Surrey CR0 2EF(GB)

(54) Power supply apparatus.

(57) A circuit for supplying electric current comprises phase, neutral and earth conductors and a residual current conductor for conducting to earth intentional residual currents from filters and the like. A residual current circuit-breaker disconnects at least the phase conductor when the vector sum of currents in the phase, neutral and residual current conductors indicating a leak to earth exceeds a given magnitude. A switch may be provided to connect the residual current and earth conductors when the current in the residual current conductor exceeds a given value and the residual current conductor may have an impedance so that leadkage passes through the earth conductor if it is short-circuited to the residual current conductor.

Fig. 1

-1-

## POWER SUPPLY APPARATUS

This invention relates to circuit breaker apparatus for use in an electric power supply circuit.

In a conventional single or three phase electric supply system for supplying electric current to current using equipment for household and similar purposes the current is supplied to outlet sockets or fixed electrical equipment through a plurality of conductors one of which connects the earth terminal of the sockets, or the items of current using equipment themselves, to earth in order to avoid danger of electric shocks in the event of an earth to phase or neutral fault occurring.

A shock hazard would exist if the earth conductor continuity were disrupted whilst a fault impedance was present between any normally earthed conductive parts and a phase.

This danger may be avoided or alleviated by providing the supply circuit with a residual current circuit breaker which isolates the circuit from this power source when the current flow to earth exceeds a given value, for

-1-

-2-

example 30 or 300mA. Residual current circuit breakers for this purpose are known in the art. One type of residual current circuit breaker is sensitive to the vector sum of the currents passing through the phase or phases and neutral conductors of the circuit. This sum is zero if there is no leakage; any earth leakage results in a corresponding difference between the currents passing through the phase or phases and neutral conductors, giving a non-zero vector sum. In one type of residual current circuit breaker the phase and neutral conductors pass through a transformer, whereas the earth conductor does not, and a non-zero vector sum of the currents in the phase and neutral conductors produces an emf from the transformer, which actuates a relay for disconnecting the circuit from the power source when this emf exceeds a predetermined value.

Some current using equipment now in common use for household and similar purposes, including personal computers, are generally fitted or used in conjunction with a voltage stabilisation device incorporating filters and these devices are designed to themselves pass an appreciable residual current through the protective earth conductor. When a number of such devices are connected to a supply circuit the total of the intentional residual currents can be large and sufficient to cause a residual current circuit breaker protecting the circuit to trip.

Similarly when a number of such devices are connected to a supply circuit which is not protected by a residual current circuit breaker, the intentional residual currents can present a serious electric shock hazard if the protective earth conductor continuity is disrupted, all normally earthed metal work on that part of the circuit subsequently not earthed will rise to phase potential, the prospective shock current being equal to the sum of all intentional residual currents normally passing through the earth conductor in that part of the circuit.

The present invention is intended to provide means allowing devices producing intentional residual currents to be fed from a power circuit which is protected against unintentional residual currents by a residual current circuit breaker, without risk of unwanted operation of the circuit breaker caused by these intentional residual currents, and by intention removing potentially hazardous levels of intentional residual currents from passing through the protective earth conductor.

According to one aspect of the invention, there is provided apparatus for supplying electric current to current-using equipment from an electric power source, the apparatus comprising phase or phases and neutral power supply conductors which are connectable to the power source and to said equipment, an earth conductor connectable to earth and to said equipment for earthing the equipment, a residual current conductor connectable to earth and to said equipment for receiving intentional residual currents from the equipment and conducting said residual currents to earth, and a circuit breaker arranged to disconnect at least the phase conductor or phase conductors from the power source when the vector sum of the currents passing through the phase or phases, neutral and residual current conductors exceeds a predetermined value, the residual current conductor including an impedance so that in the event of a short-circuit between said residual current conductor and said earth conductor any residual current flows through said earth conductor.

The impedance may comprise a capacitor, optionally in parallel with a resistor.

According to another aspect of the invention, there is provided apparatus for supplying electric current to current-using equipment from an electric power source, the apparatus comprising phase or phases and neutral power supply conductors which are connectable to the power source and to said equipment, an earth conductor connectable to earth and to said equipment, a residual current conductor connectable to earth and to said equipment for receiving intentional residual currents from the equipment and conducting said residual currents to earth, a circuit-breaker arranged to disconnect at least the phase conductor or phase conductors from the power source when the vector sum of the currents passing through the phase or phases, neutral and residual current conductors exceeds a predetermined value, a switch between the residual current conductor and earth conductor for connecting the residual current and the earth conductor, and means sensitive to the magnitude of the current flowing through the residual current conductor arranged to close said switch when the current flowing through the residual current conductor exceeds a predetermined magnitude.

The means for closing the switch may comprise a time delay to prevent transitory currents in the residual current conductor, which may exceed the predetermined magnitude, closing the switch. It may comprise a resistance in series with the residual current conductor and a heat-sensitive device arranged to close the switch in response to heating of the resistance by current flowing through the residual current conductor. Heat-sensitive devices capable of operating a switch in this way are known in the art.

The residual current circuit breaker may comprise a transformer through which the phase, neutral and residual current conductors, but not the protective earth conductor, pass and a non-zero vector sum of the currents in the conductors passing through the transformer causes the transformer to emit a signal which trips the residual current circuit breaker when the signal exceeds a predetermined magnitude.

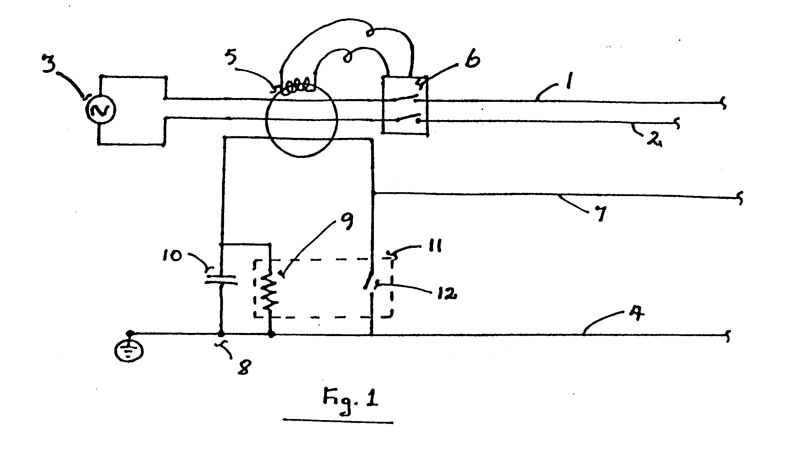

A circuit arrangement according to one embodiment of the invention will now be described by way of example with reference to the accompanying drawing (Figure 1) in which the arrangement is shown schematically for a single phase circuit.

As shown in the drawing an electric supply circuit comprises a live conductor 1 and a neutral conductor 2 supplying alternating currents at 240V and (50Hz frequency) from the mains supply, indicated by source 3.

Conductors 1 and 2 extend through a building in which they are connected to the phase and neutral terminals of a number of sockets for feeding power to current using equipment. A third terminal of the sockets is connected to earth conductor 4. The circuit is protected by a residual current circuit breaker comprising a transformer 5 through which the phase and neutral conductors pass connected to a relay unit 6 arranged to break the supply circuit when a signal from transformer 5 representing the vector sum of the currents in the conductors passing through the transformer exceeds a predetermined value, such as 10mA.

The supply circuit is provided with a fourth conductor 7 passing through the transformer which is connected to the earth conductor 4 via items 9 & 10 at point 8, on the side of the circuit-breaker remote from the sockets fed by the circuit. Conductor 7 is connected to a fourth terminal of the sockets or fixed current using equipment which is intended to pass intentional residual currents from devices and appliances receiving current from the circuit. The appliances will be arranged so that any intentional residual current generated during their normal operation will be fed to their residual current output, and not to the earth conductor, while any unintentional residual current arising from a fault in the current using equipment will be fed to earth conductor 4. By this means, the intentional residual current in normal operation cannot trip the circuit-breaker, as the latter is sensitive to the vector sum of the currents in the phase, neutral and residual current conductors and this sum is zero under normal circumstances. However, unintentional residual currents through conductor 4 will render this sum non-zero and trip the circuit breaker when it exceeds the predetermined value. The supply circuit is thus protected from short-circuits and limited current faults between phase, neutral and earth in the appliances connected to it while allowing intentional residual currents generated by the current using equipment and associated devices to be accommodated.

The residual current passing through conductor 7 flows along the earth conductor from point 8 onwards and it is generally desirable to limit this intentional residual current to a given maximum value, such as 0.5A. This may be done by providing conductor 7 with a device, such as a heat, voltage or current detector, which is sensitive to this current and can trip the circuit-breaker directly or indirectly when the maximum intentional residual current value is exceeded.

The residual current conductor 7 is provided with an impedance, such as a resistance 9 and capacitor 10 in parallel, between the circuit-breaker and point 8. The function of this impedance is to ensure that the circuit-breaker will still protect the circuit in the event of a short-circuit between the earth conductor 4 and the residual current conductor 7.

In the arrangement shown in the drawing (Figure 1) resistance 9 is provided with a heat-sensor device, shown schematically as 11, which comprises a switch 12 connecting conductor 4 and 7. Device 11 is arranged so that when the current in resistance 9 exceeds 0.5A the heat generated has the effect of closing switch 12, thus short-circuiting conductors 4 and 7 and causing the residual current to flow to earth through conductor 4 so that the circuit-breaker is tripped.

-8-

Alternatively or additionally, device 11 may be connected to an alarm device to generate an acoustic or visual alarm signal when the current in residual current conductor 7 exceeds a given value. Device 11 may also incorporate a time delay to prevent transitory currents above the desired maximum tripping the circuit-breaker.

A typical value of resistance 9 is above 10-20 ohms and capacitor 10 may have a value of about 0.1μF to 2μF. Resistance 9 and capacitor 10 together provide an impedance on conductor 7 which is relatively high at low frequencies, such as the normal 50/60Hz frequency of the mains supply, but which is relatively low at high frequencies. This impedance thus allows high-frequency currents to pass to to earth through conductor 7 relatively freely and it is only low-frequency intentional residual currents which will be sensed by device 11 to trip the circuit-breaker when they exceed the predetermined value. If necessary capacitor 10 and resistance 9 may be replaced by a more elaborate filter arrangement, which may incorporate semiconductor devices to increase the selectivity of this impedance with regard to frequency.

The arrangement shown in the drawing has an impedance on the conductor 7 comprising a resistance and a capacitor but the resistance may not be necessary, as a capacitor of suitable magnitude may provide the required impedance without the use of other circuit elements.

The arrangement shown in the drawing relates to a single-phase power supply circuit but the invention is also applicable to multi-phase supply circuits, including three-phase power supply circuits.

## CLAIMS

1. Apparatus for supplying electric current to current-using equipment from an electric power source, the apparatus comprising phase or phases and neutral power supply conductors which are connectable to the power source and to said equipment, an earth conductor connectable to earth and to said equipment for earthing the equipment, a residual current conductor connectable to earth and to said equipment for receiving intentional residual currents from the equipment and conducting said residual currents to earth, and a circuit breaker arranged to disconnect at least the phase conductor or phase conductors from the power source when the vector sum of the currents passing through the phase or phases, neutral and residual current conductors exceeds a predetermined value, the residual current conductor including an impedance so that in the event of a short-circuit between said residual current conductor and said earth conductor any residual current flows through said earth conductor.

2. Apparatus according to claim 1, in which said impedance comprises a capacitor.

3. Apparatus according to claim 2, in which said impedance comprises a resistor in parallel with the capacitor.

4. Apparatus for supplying electric current to current-using equipment from an electric power source, the apparatus comprising phase or phases and neutral power supply conductors which are connectable to the power source and to said equipment, an earth conductor connectable to earth and to said equipment, a residual current conductor connectable to earth and to said equipment for receiving intentional residual currents from the equipment and conducting said residual currents to earth, a circuit-breaker arranged to disconnect at least the phase conductor or phase conductors from the power source when the vector sum of the currents passing through the phase or phases, neutral and residual current conductors exceeds a predetermined value, a switch between the residual current conductor and earth conductor for connecting the residual current and the earth conductor, and means sensitive to the magnitude of the current flowing through the residual current conductor arranged to close said switch when the current flowing through the residual current conductor exceeds a predetermined magnitude.

5.      Apparatus according to claim 4, in which said means comprises a time delay to prevent transitory currents in the residual current conductor closing the switch.

6.      Apparatus according to claim 4 or 5, in which said means comprises a resistance in series with the residual current conductor and a heat-sensor device arranged to close the switch in response to heating of the resistance by current flowing through the residual current conductor.

7.     Apparatus according to any preceding claim, in which the residual current circuit breaker comprises a transformer through which the phase or phases, neutral and residual current conductors, but not the earth conductor, pass and the vector sum of the currents in the conductors passing through the transformer causes the transformer to emit a signal actuating means to disconnect the phase conductor or phase conductors from the power source when said sum exceeds a predetermined magnitude.

8.     Apparatus for supplying electric current, substantially as hereinbefore described with reference to the accompanying drawing.

Fig. 1